# EUROPEAN PATENT APPLICATION

(11) **EP 4 468 411 A1**
(43) Date of publication of application: **27.11.2024**
(21) Application number: 23880019.7
(22) Date of filing: 11.09.2023
(51) Int. Cl.: H01M 4/36, H01M 4/48, H01M 4/62, H01M 10/052, H01M 4/02

(54) **NEGATIVE ELECTRODE ACTIVE MATERIAL, NEGATIVE ELECTRODE INCLUDING SAME, SECONDARY BATTERY INCLUDING SAME, AND METHOD FOR PREPARING NEGATIVE ELECTRODE ACTIVE MATERIAL**

(30) Priority: 18.10.2022 KR 20220134138
(71) Applicant: LG Energy Solution, Ltd., Seoul 07335 (KR)
(72) Inventor: OH, Ilgeun, Daejeon 34122 (KR); PARK, Heeyeon, Daejeon 34122 (KR); SHIN, Sun Young, Daejeon 34122 (KR); LEE, Yong Ju, Daejeon 34122 (KR); CHOI, Junghyun, Daejeon 34122 (KR)
(74) Representative: Hoffmann Eitle
(86) International application number: PCT/KR2023/013550
(87) International publication number: WO 2024/085439

(57) **Abstract**

The present invention relates to a negative electrode active material, a negative electrode including the same, a secondary battery including the same and a method for preparing a negative electrode active material.

## Description

### [Technical Field]

The present invention relates to a negative electrode active material, a negative electrode including the same, a secondary battery including the same and a method for preparing a negative electrode active material.

This application claims priority to and the benefit of Korean Patent Application No. 10-2022-0134138 filed in the Korean Intellectual Property Office on October 18, 2022, the entire contents of which are incorporated herein by reference.

### [Background Art]

Recently, with the rapid spread of electronic devices using batteries such as mobile phones, notebook-sized computers, and electric vehicles, the demand for small and lightweight secondary batteries having relatively high capacity is rapidly increasing. In particular, lithium secondary batteries are lightweight and have high energy density, and thus have attracted attention as driving power sources for mobile devices. Accordingly, research and development efforts to improve the performance of lithium secondary batteries have been actively conducted.

In general, a lithium secondary battery includes a positive electrode, a negative electrode, a separator interposed between the positive electrode and the negative electrode, an electrolyte, an organic solvent and the like. Further, for the positive electrode and the negative electrode, an active material layer including each of a positive electrode active material and a negative electrode active material may be formed on a current collector. In general, lithium-containing metal oxides such as LiCoO₂ and LiMn₂O₄ have been used as the positive electrode active material for the positive electrode, and lithium-free carbon-based active materials and silicon-based active materials have been used as the negative electrode active material for the negative electrode.

Among the negative electrode active materials, the silicon-based active material is attracting attention because the silicon-based active material has a high capacity and excellent high-speed charging characteristics compared to the carbon-based active material. However, the silicon-based active material has a disadvantage in that the initial efficiency is low because the degree of volume expansion/contraction due to charging/discharging is large and the irreversible capacity is large.

Meanwhile, among the silicon-based active materials, a silicon-based oxide, specifically, a silicon-based oxide represented by SiOₓ (0<x<2) has an advantage in that the degree of volume expansion/contraction due to charging/discharging is low compared to other silicon-based active materials such as silicon (Si). However, the silicon-based oxide still has a disadvantage in that the initial efficiency is lowered due to the presence of the irreversible capacity.

In this regard, studies have been continuously conducted to reduce irreversible capacity and improve initial efficiency by doping or intercalating a metal such as Li, Al, and Mg into silicon-based oxides. However, in the case of a negative electrode slurry including a metal-doped silicon-based oxide as a negative electrode active material, there is a problem in that the metal oxide formed by doping the metal reacts with moisture to increase the pH of the negative electrode slurry and change the viscosity thereof, and accordingly, there is a problem in that the state of the prepared negative electrode becomes poor and the charge/discharge efficiency of the negative electrode is reduced.

Accordingly, there is a need for the development of a negative electrode active material capable of improving the phase stability of a negative electrode slurry including a silicon-based oxide and improving the charge/discharge efficiency of a negative electrode prepared therefrom.

### [Related Art Document]

### [Patent Document]

(Patent Document 1) Korean Patent Application Laid-Open No. 10-2013-0045212

### [Detailed Description of the Invention]

### [Technical Problem]

The present invention relates to a negative electrode active material, a negative electrode including the same, a secondary battery including the same and a method for preparing a negative electrode active material.

### [Technical Solution]

An exemplary embodiment of the present invention provides a negative electrode active material including: silicon-based particles including SiOₓ (0<x<2) and a Li compound; a carbon layer provided on at least a part of the surface of the silicon-based particles; LiF; and CFₐ (0<a<4), in which the content of F is 10 at% or more and the content of Li is less than 10 at% according to a surface analysis of the negative electrode active material by X-ray photoelectron spectroscopy.

An exemplary embodiment of the present invention provides a negative electrode including the negative electrode active material.

An exemplary embodiment of the present invention provides a secondary battery including the negative electrode.

An exemplary embodiment of the present invention provides a method for preparing the negative electrode active material, the method including: forming silicon-based particles including SiOₓ (0<x<2) and a Li compound and having a carbon layer provided on at least a part of the surface thereof; washing the silicon-based particles with an acid or water; and treating the silicon-based particles with fluorine plasma.

### [Advantageous Effects]

A negative electrode active material according to an exemplary embodiment of the present invention includes: silicon-based particles including SiOₓ (0<x<2) and a Li compound; a carbon layer provided on at least a part on the surface of the silicon-based particles; LiF; and CFₐ (0<a<4), in which the content of F is 10 at% or more and the content of Li is less than 10 at% according to a surface analysis of the negative electrode active material by X-ray photoelectron spectroscopy, and there is an effect that the water-based processability of a slurry is remarkably improved when the negative electrode active material is used. Specifically, LiF is hardly dissolved in water, and thus can efficiently passivate silicon-based particles in a water-based slurry, and LiF acts as an artificial SEI layer during the driving of a battery to have an effect of improving the service life performance of the battery. CFₐ (0<a<4) can suppress a reaction of moisture and a negative electrode active material in a water-based slurry by increasing the hydrophobicity of a carbon layer, and thus, can effectively passivate particles.

Therefore, a negative electrode including the negative electrode active material according to an exemplary embodiment of the present invention and a secondary battery including the negative electrode have an effect of improving the discharge capacity, initial efficiency, resistance performance and/or service life characteristics of the battery.

### [Best Mode]

Hereinafter, the present specification will be described in more detail.

When one part "includes" one constituent element in the present specification, unless otherwise specifically described, this does not mean that another constituent element is excluded, but means that another constituent element may be further included.

When one member is disposed "on" another member in the present specification, this includes not only a case where the one member is brought into contact with another member, but also a case where still another member is present between the two members.

Terms or words used in the specification should not be interpreted as being limited to typical or dictionary meaning and should be interpreted with a meaning and a concept which conform to the technical spirit of the present invention based on the principle that an inventor can appropriately define a concept of a term in order to describe his/her own invention in the best way.

Singular expressions of the terms used in the present specification include plural expressions unless they have definitely opposite meanings in the context.

In the present specification, the crystallinity of a structure included in a negative electrode active material may be confirmed by X-ray diffraction analysis, the X-ray diffraction analysis may be performed using an X-ray diffraction (XRD) analyzer (trade name: D4-endavor, manufacturer: Bruker), and in addition to the analyzer, an apparatus used in the art may be appropriately employed.

In the present specification, the presence or absence of an element and the content of the element in a negative electrode active material can be confirmed by ICP analysis, and the ICP analysis may be performed using an inductively coupled plasma atomic emission spectrometer (ICPAES, Perkin Elmer 7300).

In the present specification, an average particle diameter (D₅₀) may be defined as a particle diameter corresponding to 50% of a cumulative volume in a particle size distribution curve (graph curve of the particle size distribution map) of the particles. The average particle diameter (D₅₀) may be measured using, for example, a laser diffraction method. The laser diffraction method can generally measure a particle diameter of from submicron region to about several mm, and results with high reproducibility and high resolution may be obtained.

Hereinafter, preferred exemplary embodiments of the present invention will be described in detail. However, the exemplary embodiments of the present invention may be modified into various other forms, and the scope of the present invention is not limited to the exemplary embodiments which will be described below.

### <Negative electrode active material>

An exemplary embodiment of the present invention provides a negative electrode active material including: silicon-based particles including SiOₓ (0<x<2) and a Li compound; a carbon layer provided on at least a part of the surface of the silicon-based particles; LiF; and CFₐ (0<a<4), in which the surface analysis of the negative electrode active material using X-ray photoelectron spectroscopy shows that the content of F is 10 at% or more and the content of Li is less than 10 at%.

The negative electrode active material according to an exemplary embodiment of the present invention includes silicon-based particles. The silicon-based particles include SiOₓ (0<x<2) and a Li compound.

The SiOₓ (0<x<2) may correspond to a matrix in the silicon-based particle. The SiOₓ (0<x<2) may be in a form including Si and/or SiO₂, and the Si may also form a phase. That is, the x corresponds to the number ratio of O for Si included in the SiOₓ (0<x<2). When the silicon-based particles include the SiOₓ (0<x<2), the discharge capacity of a secondary battery may be improved.

The Li compound may correspond to a matrix in the silicon-based particle. The Li compound may be present in the form of at least one of a lithium atom, a lithium silicate, a lithium silicide, and a lithium oxide in the silicon-based particle. When the silicon-based particles include a Li compound, there is an effect that the initial efficiency is improved.

The Li compound is in a form in which the silicon-based particles are doped with the compound, and may be distributed on the surface and/or inside of the silicon-based particle. The Li compound is distributed on the surface and/or inside of the silicon-based particle, and thus may control the volume expansion/contraction of the silicon-based particles to an appropriate level, and may serve to prevent damage to the active material. Further, the Li compound may be contained in terms of reducing the ratio of the irreversible phase (for example, SiO₂) of the silicon-based oxide particles to increase the efficiency of the active material.

In an exemplary embodiment of the present invention, the Li compound may be present in the form of a lithium silicate. The lithium silicate is represented by LiₐSi_{b}O_{c} (2≤a≤4, 0<b≤2, 2≤c≤5) and may be classified into crystalline lithium silicate and amorphous lithium silicate. The crystalline lithium silicate may be present in the form of at least one lithium silicate selected from the group consisting of Li₂SiO₃, Li₄SiO₄ and Li₂Si₂O₅ in the silicon-based particles, and the amorphous lithium silicate may consist of a complex structure in the form of LiₐSi_{b}O_{c} (2≤a≤4, 0<b≤2, 2≤c≤5), and are not limited to the forms. In an exemplary embodiment of the present invention, Li may be included in an amount of 0.1 parts by weight to 40 parts by weight or 0.1 parts by weight to 25 parts by weight based on total 100 parts by weight of the negative electrode active material. Specifically, the Li may be included in an amount of 1 part by weight to 25 parts by weight, more specifically 2 parts by weight to 20 parts by weight. As the content of Li is increased, the initial efficiency is increased, but there is a problem in that the discharge capacity is decreased, so that when the content satisfies the above range, appropriate discharge capacity and initial efficiency may be implemented.

The content of the Li element can be confirmed by ICP analysis. Specifically, after a predetermined amount (about 0.01 g) of the negative electrode active material is aliquoted, the negative electrode active material is completely decomposed on a hot plate by transferring the aliquot to a platinum crucible and adding nitric acid, hydrofluoric acid, or sulfuric acid thereto. Thereafter, a reference calibration curve is prepared by measuring the intensity of a standard liquid prepared using a standard solution (5 mg/kg) in an intrinsic wavelength of an element to be analyzed using an inductively coupled plasma atomic emission spectrometer (ICPAES, Perkin-Elmer 7300). Thereafter, a pre-treated sample solution and a blank sample are each introduced into the apparatus, an actual intensity is calculated by measuring each intensity, the concentration of each component relative to the prepared calibration curve is calculated, and then the contents of the elements of the prepared negative electrode active material may be analyzed by converting the total sum so as to be the theoretical value.

In an exemplary embodiment of the present invention, the silicon-based particles may include an additional metal atom. The metal atom may be present in the form of at least one of a metal atom, a metal silicate, a metal silicide, and a metal oxide in the silicon-based particle. The metal atom may include at least one selected from the group consisting of Mg, Li, Al and Ca. Accordingly, the initial efficiency of the negative electrode active material may be improved.

In an exemplary embodiment of the present invention, the silicon-based particles have a carbon layer provided on at least a part of the surface thereof. In this case, the carbon layer may be in the form of being coated on at least a part of the surface, that is, being partially coated on the particle surface or being coated on the entire particle surface. By the carbon layer, conductivity is imparted to the negative electrode active material, and the initial efficiency, service life characteristics, and battery capacity characteristics of the secondary battery may be improved.

In an exemplary embodiment of the present invention, the carbon layer includes amorphous carbon.

Further, the carbon layer may additionally include crystalline carbon.

The crystalline carbon may further improve the conductivity of the negative electrode active material. The crystalline carbon may include at least one selected from the group consisting of fullerene, carbon nanotubes and graphene.

The amorphous carbon may suppress the expansion of the silicon-based particles by appropriately maintaining the strength of the carbon layer.
The amorphous carbon may be a carbon-based material formed using a carbonized material of at least one selected from the group consisting of tar, pitch and other organic materials, or formed by depositing a hydrocarbon as a source of a chemical vapor deposition method.

The carbonized material of the other organic materials may be a carbonized material of sucrose, glucose, galactose, fructose, lactose, mannose, ribose, aldohexose, ketohexose or combinations thereof.

The hydrocarbon may be a substituted or unsubstituted aliphatic or alicyclic hydrocarbon, or a substituted or unsubstituted aromatic hydrocarbon. The aliphatic or alicyclic hydrocarbon of the substituted or unsubstituted aliphatic or alicyclic hydrocarbon may be methane, ethane, ethylene, acetylene, propane, butane, butene, pentane, isobutane, hexane, or the like. Examples of the aromatic hydrocarbon of the substituted or unsubstituted aromatic hydrocarbon include benzene, toluene, xylene, styrene, ethylbenzene, diphenylmethane, naphthalene, phenol, cresol, nitrobenzene, chlorobenzene, indene, coumarone, pyridine, anthracene, phenanthrene, or the like.

In an exemplary embodiment of the present invention, the carbon layer may be an amorphous carbon layer.

In an exemplary embodiment of the present invention, the carbon layer may be included in an amount of 0.1 parts by weight to 50 parts by weight, 0.1 parts by weight to 30 parts by weight or 0.1 parts by weight to 20 parts by weight, based on total 100 parts by weight of the negative electrode active material. More specifically, the carbon layer may be included in an amount of 0.5 parts by weight to 15 parts by weight, 1 part by weight to 10 parts by weight or 1 part by weight to 5 parts by weight. When the above range is satisfied, it is possible to prevent a decrease in the capacity and efficiency of the negative electrode active material.

In an exemplary embodiment of the present invention, the carbon layer may have a thickness of 1 nm to 500 nm, specifically 5 nm to 300 nm. When the above range is satisfied, the conductivity of the negative electrode active material is improved, the volume change of the negative electrode active material is readily suppressed, and side reactions between an electrolyte solution and the negative electrode active material are suppressed, so that there is an effect that the initial efficiency and/or service life of a battery is/are improved.

Specifically, the carbon layer may be formed by a chemical vapor deposition (CVD) method using at least one hydrocarbon gas selected from the group consisting of methane, ethane and acetylene.

In an exemplary embodiment of the present invention, the negative electrode active material may include LiF and CFₐ (0<a<4).

Specifically, when a negative electrode active material is prepared, silicon-based particles having a carbon layer provided on at least a part of the surface thereof are formed, and then F may be introduced to the surface of the particles through fluorine plasma treatment. In this process, LiF may be formed by introducing F into a lithium by-product generated when the silicon-based particles are doped with Li, and F may be introduced into the carbon of a carbon layer provided on the surface of the silicon-based particles and the resulting product may be present in the form of CFₐ (0<a<4).

LiF formed as described above is hardly soluble in water and can efficiently passivate the silicon-based particles in a water-based slurry, and has an effect of improving the water-based processability by preventing the Li compound included in the silicon-based particles from being eluted to prevent the slurry from being basic. In addition, LiF acts as an artificial SEI layer during the driving of a battery to have an effect of improving the service life performance of the battery.

In an exemplary embodiment of the present invention, the LiF and CFₐ (0<a<4) may be provided on the silicon-based particles.

In an exemplary embodiment of the present invention, the LiF and CFₐ (0<a<4) may be provided on the outermost surface of the negative electrode active material.

The LiF may be provided on the surface of the silicon-based particles, inside the carbon layer, or on the surface of the carbon layer. Specifically, the LiF may be provided on at least a part of the carbon layer, or on at least a part on a region in which the carbon layer is not provided on the surface of the silicon-based particles. The LiF may be formed at a position where lithium by-products or lithium silicate are or is present in the negative electrode active material, but is not limited thereto.

The LiF may be in the form of being partially coated on the surface or being coated on the entire surface. Examples of a shape of the LiF include an island type, a thin film type, or the like, but the shape of the LiF is not limited thereto.
Further, the LiF may be provided on the surface of the silicon-based particles by introducing F into the Li compound included in the silicon-based particles.

The CFₐ (0<a<4) may be provided inside the carbon layer or on the surface of the carbon layer.

Specifically, the CFₐ (0<a<4) is formed by introducing F into the surface of the carbon layer, and has a structure including a C-F bond. That is, the CFₐ (0<a<4) may be located inside the carbon layer, or located on the surface of the carbon layer, and specifically, may be mainly located near the surface of the carbon layer.

F is introduced into the surface of the carbon layer to form CFₐ (0<a<4), so that it is possible to effectively passivate particles because the hydrophobicity of the carbon layer is increased to suppress a reaction of moisture and a negative electrode active material in a water-based slurry.

In an exemplary embodiment of the present invention, the negative electrode active material may further include SiF_{b} (0<b<4). When F is introduced to the surface of the silicon-based particles through fluorine plasma treatment, F may also be introduced into the silicon-based particles, and may be present in the form of SiF_{b} (0<b<4) by forming Si-F bonds with the silicon inside the particles. The SiF_{b} (0<b<4) may be located inside the silicon-based particles or may be located on the surface of the silicon-based particles, and specifically, may be mainly located near the surface of the silicon-based particles.

Components included in the negative electrode active material may be confirmed through X-ray diffraction analysis (XRD) or X-ray photoelectron spectroscopy (XPS).

In the present invention, the content and atomic ratio of the element on the surface of the negative electrode active material can be confirmed through XPS (Nexsa ESCA System, Thermo Fisher Scientific (ESCA-02)).

Specifically, after a survey scan spectrum and a narrow scan spectrum are obtained for each sample, the survey scan spectrum and the narrow scan spectrum may be obtained while performing a depth profile. The depth profile may be performed up to 3000 seconds using monatomic Ar ions, and the measurement and data processing conditions are as follows.
- X-ray source: Monochromated Al K α (1486.6 eV)
- X-ray spot size: 400 µm
- Sputtering gun: Monatomic Ar (energy: 1000 eV, current: low, raster width: 2 mm)
- Etching rate: 0.09 nm/s for Ta₂O₅
- Operation Mode: CAE (Constant Analyzer Energy) mode
- Survey scan: pass energy 200 eV, energy step 1 eV
- Narrow scan: scanned mode, pass energy 50 eV, energy step 0.1 eV
- Charge compensation: flood gun off
- SF: Al THERMO1
- ECF: TPP-2M
- BG subtraction: Shirley

In an exemplary embodiment of the present invention, the depth profile of the X-ray photoelectron spectroscopy (XPS) may be measured by performing the spectroscopy under the X-ray source of the monochromated Al K α at 0.09 nm/s for up to 3000 seconds.

In an exemplary embodiment of the present invention, Li, Si, C, N, O, F, or the like may be detected during surface analysis of the negative electrode active material by X-ray photoelectron spectroscopy.

Hereinafter, the content of elements by X-ray photoelectron spectroscopy is based on the total 100 at% of the total elements measured based on 100s.

In an exemplary embodiment of the present invention, the content of F may be 10 at% or more and the content of Li may be less than 10 at%, according to a surface analysis of the negative electrode active material by X-ray photoelectron spectroscopy.

Specifically, the content of F may be 10 at% or more and 50 at% or less, 12 at% or more and 40 at% or less, 15 at% or more and 35 at% or less, or 15 at% or more and 30 at% or less, or 20 at% or more and 30 at% or less. The lower limit of the content of F may be 10 at%, 12 at%, 14 at%, 15 at%, 16 at%, 18 at% or 20 at%, and the upper limit thereof may be 50 at%, 45 at%, 40 at%, 35 at%, 30 at% or 25 at%.

When the F element satisfies the aforementioned content on the surface of the negative electrode active material, there is an effect that F can be sufficiently introduced into the negative electrode active material to remove lithium by-products and effectively introduce F into the carbon layer, and the water-based processability is improved by preventing the negative electrode active material in the aqueous slurry from reacting with moisture or preventing lithium by-products from being eluted.

When the content of F is equal to or more than the lower limit of the above range, a passivation effect may appear because the amount of F introduced to the surface of the negative electrode active material is appropriate, and when the content of F is equal to or less than the upper limit of the above range, it is possible to prevent a decrease in viscosity by preventing the generation of a large number of unstable F bonds such as C-F and Si-F to suppress the generation of HF in the water-based slurry and the decomposition of components such as CMC by HF.

In an exemplary embodiment of the present invention, the content of Li may be less than 10 at% according to a surface analysis of the negative electrode active material by X-ray photoelectron spectroscopy. Specifically, the content of Li may be 1 at% or more and less than 10 at%, 3 at% or more and 9 at% or less, 5 at% or more and 9 at% or less or 7 at% or more and 8 at% or less. The lower limit of the content of Li may be 1 at%, 3 at%, 5 at%, 6 at% or 7 at%, and the upper limit thereof may be 9.9 at%, 9.5 at%, 9 at%, 8.5 at% or 8 at%.

When the Li element on the surface of the negative electrode active material satisfies the above content, lithium silicate is uniformly formed even inside the silicon-based particles, so that appropriate capacity and efficiency may be implemented. When the content of Li is equal to or less than the upper limit of the above range, it is possible to suppress excessive Li by-products from remaining, thereby preventing an excessive increase in the pH of the slurry and minimizing gas generation due to a reaction with Si.

In an exemplary embodiment of the present invention, the content of Si may be 7 at% or less according to a surface analysis of the negative electrode active material by X-ray photoelectron spectroscopy. Specifically, the content of Si may be 0.1 at% or more and 7 at% or less, 1 at% or more and 6 at% or less, 2 at% or more and 4 at% or less, 2.5 at% or more and 4 at% or less, or 3 at% or more and 3.5 at% or less. The lower limit of the content of Si may be 0.1 at%, 1 at%, 2 at%, 2.5 at% or 3 at%, and the upper limit thereof may be 5 at%, 4 at% or 3.5 at%.

When the Si element on the surface of the negative electrode active material satisfies the aforementioned content, materials such as LiF or CFₐ (0<a<4) which serves as passivation are present in an appropriate amount and may prevent the generation of gases in a water-based mixing system due to their excellent passivation effects, and the materials, which serve as passivation during the driving of a battery, may act as resistors to exhibit a smooth battery driving effect. When the content of Si is equal to or more than the lower limit of the above range, it is possible to prevent an increase in resistance due to the excessive formation of materials that serve as passivation, and when the content of Si is equal to or less than the upper limit of the above range, it is possible to prevent gas generation problems in water-based processes by allowing materials that serve as passivation to be uniformly formed.

In an exemplary embodiment of the present invention, the content of C may be 40 at% or more according to a surface analysis of the negative electrode active material by X-ray photoelectron spectroscopy. Specifically, the content of C may be 40 at% or more and 70 at% or less, 45 at% or more and 65 at% or less, 45 at% or more and 60 at% or less, or 50 at% or more and 60 at% or less. The lower limit of the content of C may be 40 at%, 45 at%, or 50 at%, and the upper limit thereof may be 70 at%, 65 at%, or 60 at%.

When the C element on the surface of the negative electrode active material satisfies the aforementioned content, an appropriate amount of C-F functional group is introduced into the carbon layer, so that there is an effect that the reactivity with water is suppressed, and gas generation is also suppressed because the hydrophobicity of the carbon layer increases. When the content of C is equal to or more than the lower limit of the above range, a carbon layer may be uniformly formed to minimize exposed Si, thereby minimizing gas generation problems, and when the content of C is equal to or less than the upper limit of the above range, an appropriate amount of carbon layer may prevent a deterioration in battery performance due to an excessive increase in resistance during battery operation.

In an exemplary embodiment of the present invention, the content of O may be 15 at% or less according to a surface analysis of the negative electrode active material by X-ray photoelectron spectroscopy. Specifically, the content of O may be 2 at% or more and 15 at% or less, 5 at% or more and 12 at% or less or 6 at% or more and 12 at% or less. The lower limit of the content of O may be 2 at%, 4 at%, 5 at%, or 6 at%, and the upper limit thereof may be 15 at%, 14 at%, 12 at% or 10 at%.

When the content of O is equal to or more than the lower limit of the above range, there was no excessive reduction for a decrease in oxygen content, so that it is possible to suppress the generation of HF due to the bonding of unstable F elements in water-based processes, thereby preventing a rapid decrease in viscosity by suppressing the decomposition reaction of materials such as CMC in the slurry. When the content of O is equal to or less than the upper limit of the above range, the hydrophilicity is reduced, so that gas generation may be prevented because the surface does not easily react with water.

When the negative electrode active material of the present invention satisfies the above element content range, F is sufficiently introduced into the negative electrode active material, so that lithium by-products are easily removed, and simultaneously, LiF is formed, and F is effectively introduced into the carbon layer to form CFₐ, and there is an effect that the water-based processability is improved by preventing the negative electrode active material in the water-based slurry from reacting with moisture or lithium by-products from being eluted because the amounts of LiF and CFₐ produced are appropriate.

In an exemplary embodiment of the present invention, an atomic ratio (F/O ratio) of F relative to O may be 1 or more and 6 or less according to a surface analysis of the negative electrode active material by X-ray photoelectron spectroscopy. Specifically, the atomic ratio may be 1.2 or more and 5 or less, or 1.5 or more and 4 or less. When the above range is satisfied, F is appropriately introduced into the surface of the negative electrode active material to easily form LiF and CFₐ, so that there is an effect that slurry processability and service life performance are remarkably improved because silicon-based particles are easily passivated in the slurry and LiF acts as an artificial SEI layer during the driving of the battery. When the content is equal to or more than the lower limit of the above range, the content is advantageous in a passivation effect because the amount of F introduced to the surface of the negative electrode active material is sufficient, and when the content is equal to or less than the upper limit of the above range, it is possible to prevent a remarkable decrease in viscosity by preventing the generation of a large number of unstable F bonds such as C-F and Si-F to suppress the generation of HF in the water-based slurry and the decomposition of components such as CMC in the slurry by HF.

In an exemplary embodiment of the present invention, an atomic ratio (C/Li ratio) of C relative to Li may be more than 4 and 10 or less according to a surface analysis of the negative electrode active material by X-ray photoelectron spectroscopy. Specifically, the atomic ratio may be 5 or more and 9 or less, 6 or more and 8.5 or less, or 7 or more and 8 or less. When the above range is satisfied, the content of LiF and CFₐ located on the surface of the negative electrode active material is appropriate, so that there is an effect that slurry processability and service life performance are remarkably improved because silicon-based particles may be easily passivated in the slurry and LiF acts as an artificial SEI layer during the driving of the battery. When the content is equal to or more than the lower limit of the above range, a carbon layer may be uniformly formed to prevent the passivation effect from decreasing, and Li by-products are appropriately present, and thus do not easily react with water, and when the content is equal to or less than the upper limit of the above range, an appropriate amount of carbon layer may prevent a deterioration in battery performance due to an excessive increase in resistance during battery operation.

In an exemplary embodiment of the present invention, the content of CFₐ (0<a<4) may be higher than the content of LiF. In general, during the process of forming the carbon layer on the silicon-based particles, and then doping the silicon-based particles with lithium, the lithium by-products are mainly present on the carbon layer. In this case, since the produced lithium by-products are one of the causes of allowing the water-based slurry to be become basic, a process of removing the lithium by-products may be performed using an acid or water. Thereafter, when the silicon-based particles are treated with fluorine plasma, the amount of remaining lithium by-products is so small that the content of CFₐ (0<a<4) may be larger than the content of LiF because F is preferentially introduced into the carbon layer.

In an exemplary embodiment of the present invention, a lithium by-product may be present on the silicon-based particles. Specifically, the lithium by-product may be present on the surface of the silicon-based particles or present on the surface of the carbon layer.

Specifically, the lithium by-product may mean a lithium compound remaining near the surface of the silicon-based particles or the carbon layer after preparing the silicon-based particles. As described above, even after the acid treatment process, a lithium by-product which has not been reacted with the acid may remain.

The lithium by-product may include one or more selected from the group consisting of Li₂O, LiOH and Li₂CO₃. As in the above-described reaction, LiF may be formed in the lithium by-products during the fluorine plasma treatment, and unreacted lithium by-products may be present on the silicon-based particles.

Whether the lithium by-product is present can be confirmed through X-ray diffraction analysis (XRD) or X-ray photoelectron spectroscopy (XPS).

The lithium by-product may be included in an amount of 5 parts by weight or less based on total 100 parts by weight of the negative electrode active material. Specifically, the lithium by-product may be included in an amount of 0.01 parts by weight to 5 parts by weight, 0.05 parts by weight to 2 parts by weight, or 0.1 parts by weight to 1 part by weight. More specifically, the lithium by-product may be included in an amount of 0.1 parts by weight to 0.8 parts by weight or 0.1 parts by weight to 0.5 parts by weight. When the content of the lithium by-product satisfies the above range, side reactions in the slurry may be reduced, and the water-based processability may be improved by lowering the change in viscosity. When the content is equal to or less than the upper limit of the above range, it is possible to minimize the occurrence of water-based processability problems due to the occurrence of side reactions or the changes in viscosity by preventing the slurry from becoming basic during formation of the slurry.

For the content of the lithium by-product, the amount of the lithium by-product may be calculated after measuring the amount of a HCl solution in a specific interval where the pH changes during the process of titrating an aqueous solution including the negative electrode active material with the HCl solution using a titrator.

The negative electrode active material may have an average particle diameter (D50) of 0.1 um to 30 um, specifically 1 um to 20 µm, and more specifically 1 um to 10 um. When the above range is satisfied, the active material during charging and discharging is ensured to be structurally stable, and it is possible to prevent a problem in that the volume expansion/contraction level also becomes large as the particle diameter is excessively increased, and to prevent a problem in that the initial efficiency is reduced because the particle diameter is excessively small.

The negative electrode active material may have a BET specific surface area of 1 m²/g to 100 m²/g, specifically 1 m²/g to 70 m²/g, more specifically 1 m²/g to 50 m²/g, and for example, 2 m²/g to 30 m²/g. When the above range is satisfied, side reactions with an electrolyte solution during the charging and discharging of a battery may be reduced, so that the service life characteristics of the battery may be improved.

### <Preparation method of negative electrode active material>

An exemplary embodiment of the present invention provides a method for preparing the negative electrode active material, the method including: forming silicon-based particles including SiOₓ (0<x<2) and a Li compound and having a carbon layer provided on at least a part of the surface thereof; washing the silicon-based particles with an acid or water; and treating the silicon-based particles with fluorine plasma.

The silicon-based particles may be formed through forming preliminary particles by heating and vaporizing a Si powder and a SiO₂ powder under vacuum, and then depositing the vaporized mixed gas; forming a carbon layer on the surface of the formed preliminary particles; and mixing the preliminary particles on which the carbon layer is formed with a Li powder, and then heat-treating the resulting mixture.

Specifically, the mixed powder of the Si powder and the SiO₂ powder may be heat-treated at 1300°C to 1800°C, 1400°C to 1800°C or 1400°C to 1600°C under vacuum.

The formed preliminary particles may have a form of SiO.

The carbon layer may be formed using chemical vapor deposition (CVD) using a hydrocarbon gas or by a method of carbonizing a material which is a carbon source.

Specifically, the carbon layer may be formed by introducing the formed preliminary particles into a reaction furnace, and then subjecting a hydrocarbon gas to chemical vapor deposition (CVD) at 600 to 1,200°C. The hydrocarbon gas may be at least one hydrocarbon gas selected from the group including methane, ethane, propane and acetylene, and may be heat-treated at 900°C to 1,000°C.

After the mixing of the preliminary particles on which the carbon layer is formed with the Li powder, heat-treating of the resulting mixture may be performed at 700°C to 900°C for 4 hours to 6 hours, and specifically at 800°C for 5 hours.

The silicon-based particles may include a Li silicate, a Li silicide, a Li oxide, or the like as the above-described Li compound.

The particle size of the silicon-based particles may be adjusted by a method such as a ball mill, a jet mill, or an air current classification, and the method is not limited thereto.

A lithium compound (lithium by-product) is provided on at least a part of the surface of the silicon-based particles provided with the carbon layer as described above. Specifically, in the process of preparing the above-described silicon-based particles by forming the preliminary particles including SiOₓ (0<x<2), forming a carbon layer on the preliminary particles, and then doping the preliminary particles with Li, a lithium compound, that is, a lithium by-product formed by unreacted lithium remains near the surface of the silicon-based particles.

In an exemplary embodiment of the present invention, the method for preparing the negative electrode active material may include washing the silicon-based particles with an acid or water.

When the silicon-based particles are washed with water, ultrapure water (Di-water) may be used.

When the silicon-based particles are washed with an acid, the type of acid may be selected from the group consisting of hydrochloric acid, citric acid, oxalic acid, and boric acid.

The acid may be at a concentration of 0.1 M to 1 M.

The silicon-based particles may be washed by mixing the silicon-based particles and the acid at a weight ratio of 1:40 to 1:60. Preferably, the silicon-based particles and the acid may be mixed at a weight ratio of 1:50. In this case, the mixture may be stirred for 30 minutes to 2 hours or 1 hour and then filtered to obtain silicon-based particles from which lithium by-products are partially removed.

In an exemplary embodiment of the present invention, the method for preparing the negative electrode active material includes treating the silicon-based particles with fluorine plasma.

The treating of the silicon-based particles with fluorine plasma includes: putting the silicon-based particles into a plasma chamber, and then injecting CF₄ gas; increasing pressure in the chamber; and forming plasma in the chamber.

The plasma treatment may be performed using an RF plasma.

Specifically, the pressure in the chamber may be adjusted to 0.01 torr to 0.1 torr before injecting the CF₄ gas into the chamber. Preferably, the pressure may be adjusted to 0.05 torr to 0.09 torr or 0.07 torr.

Thereafter, in the increasing of the pressure in the chamber, the pressure in the chamber may be adjusted to 0.1 torr to 0.5 torr. Specifically, the pressure may be adjusted to 0.15 torr to 0.3 torr or 0.2 torr.

The forming of the plasma in the chamber may be performed by applying power to the chamber. Specifically, the power may be 50 W to 300 W, 80 W to 250 W or 100 W to 200 W.

The plasma may be maintained for 1 minute to 10 minutes. Preferably, the plasma may be maintained for 3 minutes to 8 minutes, 5 minutes to 7 minutes or 6 minutes.

When the plasma treatment is performed while satisfying the above range, F may be introduced into the negative electrode active material in an appropriate content.

After F is introduced into the negative electrode active material by forming plasma in the chamber, vacuum is released at normal pressure, and then the sample may be collected.

The fluorine plasma treatment step may be repeated two or more times, preferably twice.

When F is introduced into the negative electrode active material by a dry method using plasma as in the present invention, the lithium inside the silicon-based particles including the Li compound is not dissolved, thereby further improving passivation characteristics. In contrast, when F is introduced by a method such as hydrothermal synthesis or solvothermal synthesis, the surface of the silicon-based particles becomes porous, thereby reducing the passivation effect.

As described above, through the fluorine plasma treatment, there is an effect that F is introduced into the lithium by-products formed during doping of silicon-based particles with lithium to form LiF, and the formed LiF easily blocks the reaction between water and the lithium compound or silicon-based particles, and acts as an artificial SEI layer during the driving of the battery to improve service life performance.

Furthermore, F is introduced into the surface of the carbon layer to form CFₐ (0<a<4), so that it is possible to effectively passivate particles because the hydrophobicity of the carbon layer is increased to suppress a reaction of moisture and a negative electrode active material in a water-based slurry.

### <Negative electrode>

The negative electrode according to an exemplary embodiment of the present invention may include the above-described negative electrode active material.

Specifically, the negative electrode may include a negative electrode current collector and a negative electrode active material layer disposed on the negative electrode current collector. The negative electrode active material layer may include the negative electrode active material. Furthermore, the negative electrode active material layer may further include a binder, a thickener and/or a conductive material.

The negative electrode active material layer may be formed by applying a negative electrode slurry including a negative electrode active material, a binder, a thickener and/or a conductive material to at least one surface of a current collector and drying and rolling the current collector.

The negative electrode slurry may further include an additional negative electrode active material.

As the additional negative electrode active material, a compound capable of reversible intercalation and deintercalation of lithium may be used. Specific examples thereof include a carbonaceous material such as artificial graphite, natural graphite, graphized carbon fiber, and amorphous carbon; a metallic material alloyable with lithium such as Si, Al, Sn, Pb, Zn, Bi, In, Mg, Ga, Cd, a Si alloy, a Sn alloy, or an Al alloy; a metal oxide which may be undoped and doped with lithium such as SiOβ (0 < β < 2), SnO₂, vanadium oxide, lithium titanium oxide, and lithium vanadium oxide; or a composite including the metallic material and the carbonaceous material such as a Si-C composite or a Sn-C composite, and the like, and any one thereof or a mixture of two or more thereof may be used. Furthermore, a metallic lithium thin film may be used as the negative electrode active material. Alternatively, both low crystalline carbon and high crystalline carbon, and the like may be used as the carbon material. Typical examples of the low crystalline carbon include soft carbon and hard carbon, and typical examples of the high crystalline carbon include irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature fired carbon such as petroleum or coal tar pitch derived cokes.

The additional negative electrode active material may be a carbon-based negative electrode active material.

In an exemplary embodiment of the present invention, a weight ratio of the negative electrode active material and the additional negative electrode active material included in the negative electrode slurry may be 10:90 to 90:10, specifically 10:90 to 50:50.

The negative electrode slurry may include a solvent for forming a negative electrode slurry. Specifically, the solvent for forming a negative electrode slurry may include at least one selected from the group consisting of distilled water, ethanol, methanol, and isopropyl alcohol, specifically distilled water in terms of facilitating the dispersion of the components.

A negative electrode slurry including the negative electrode active material according to an exemplary embodiment of the present invention may have a pH of 7 to 11 at 25°C. When the pH of the negative electrode slurry satisfies the above range, there is an effect that the rheological properties of the slurry are stabilized. When the pH of the negative electrode slurry is within the above range, the decomposition of carboxymethyl cellulose (CMC) used as a thickener is suppressed to prevent a decrease in the viscosity of the slurry and maintain the degree of dispersion of the active material included in the slurry.

The negative electrode current collector is sufficient as long as the negative electrode current collector has conductivity without causing a chemical change to the battery, and is not particularly limited.
For example, as the current collector, it is possible to use copper, stainless steel, aluminum, nickel, titanium, fired carbon, or aluminum or stainless steel whose surface is treated with carbon, nickel, titanium, silver, and the like. Specifically, a transition metal, such as copper or nickel which adsorbs carbon well, may be used as a current collector. Although the current collector may have a thickness of 6 um to 20 µm, the thickness of the current collector is not limited thereto.

The binder may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, styrene butadiene rubber (SBR), fluorine rubber, polyacrylic acid and a material in which the hydrogen thereof is substituted with Li, Na, Ca, or the like, and may also include various copolymers thereof.

The conductive material is not particularly limited as long as the conductive material has conductivity without causing a chemical change to the battery, and for example, it is possible to use graphite such as natural graphite or artificial graphite; carbon black such as acetylene black, Ketjen black, channel black, furnace black, lamp black, and thermal black; a conductive fiber such as carbon fiber or metal fiber; a conductive tube such as a carbon nanotube; a metal powder such as a fluorocarbon powder, an aluminum powder, and a nickel powder; a conductive whisker such as zinc oxide and potassium titanate; a conductive metal oxide such as titanium oxide; a conductive material such as polyphenylene derivatives, and the like.

The thickener may be carboxymethyl cellulose (CMC) and is not limited thereto, and a thickener used in the art may be appropriately employed.

In an exemplary embodiment of the present invention, a weight ratio of the negative electrode active material and the additional negative electrode active material included in the negative electrode slurry may be 1:99 to 30:70, specifically 5:95 to 30:70 or 10:90 to 20:80.

In an exemplary embodiment of the present invention, the entire negative electrode active material may be included in the negative electrode slurry in an amount of 60 parts by weight to 99 parts by weight, specifically 70 parts by weight to 98 parts by weight, based on total 100 parts by weight of the solid content of the negative electrode slurry.

In an exemplary embodiment of the present invention, the binder may be included in an amount of 0.5 parts by weight to 30 parts by weight, specifically 1 part by weight to 20 parts by weight, based on total 100 parts by weight of the solid content of the negative electrode slurry.

In an exemplary embodiment of the present invention, the conductive material may be included in an amount of 0.5 parts by weight to 25 parts by weight, specifically 1 part by weight to 20 parts by weight, based on total 100 parts by weight of the solid content of the negative electrode slurry.

In an exemplary embodiment of the present invention, the thickener may be included in an amount of 0.5 parts by weight to 25 parts by weight, specifically 0.5 parts by weight to 20 parts by weight, and more preferably 1 part by weight to 20 parts by weight based on total 100 parts by weight of the solid content of the negative electrode slurry.

The negative electrode slurry according to an exemplary embodiment of the present invention may further include a solvent for forming a negative electrode slurry. Specifically, the solvent for forming a negative electrode slurry may include at least one selected from the group consisting of distilled water, ethanol, methanol, and isopropyl alcohol, specifically distilled water in terms of facilitating the dispersion of the components.

In an exemplary embodiment of the present invention, the solid content weight of the negative electrode slurry may be 20 parts by weight to 75 parts by weight, specifically 30 parts by weight to 70 parts by weight, based on total 100 parts by weight of the negative electrode slurry.

### <Secondary battery>

A secondary battery according to an exemplary embodiment of the present invention may include the above-described negative electrode according to an exemplary embodiment. Specifically, the secondary battery may include a negative electrode, a positive electrode, a separator interposed between the positive electrode and the negative electrode, and an electrolyte solution, and the negative electrode is the same as the above-described negative electrode. Since the negative electrode has been previously described, a specific description thereof will be omitted.

The positive electrode may include a positive electrode current collector and a positive electrode active material layer formed on the positive electrode current collector and including the positive electrode active material.

In the positive electrode, the positive electrode current collector is not particularly limited as long as the positive electrode current collector has conductivity without causing a chemical change to the battery, and for example, it is possible to use stainless steel, aluminum, nickel, titanium, fired carbon, or aluminum or stainless steel whose surface is treated with carbon, nickel, titanium, silver, and the like. Further, the positive electrode current collector may typically have a thickness of 3 to 500 um, and the adhesion of the positive electrode active material may also be enhanced by forming fine irregularities on the surface of the current collector.
For example, the positive electrode current collector may be used in various forms such as a film, a sheet, a foil, a net, a porous body, a foam body, and a non-woven fabric body.

The positive electrode active material may be a typically used positive electrode active material. Specifically, the positive electrode active material includes: a layered compound such as lithium cobalt oxide (LiCoO₂) and lithium nickel oxide (LiNiO₂) or a compound substituted with one or more transition metals; a lithium iron oxide such as LiFe₃O₄; a lithium manganese oxide such as chemical formula Li_{1+c1}Mn_{2-c1}O₄ (0≤c1≤0.33), LiMnO₂, LiMn₂O₂, and LiMnO₂; a lithium copper oxide (Li₂CuO₂); a vanadium oxide such as LiV₃O₈, V₂O₅, and Cu₂V₂O₇; a Ni site type lithium nickel oxide expressed as chemical formula LiNi_{1-c2}M_{c2}O₂ (here, M is at least one selected from the group consisting of Co, Mn, Al, Cu, Fe, Mg, B and Ga, and c2 satisfies 0.01≤c2≤0.5); a lithium manganese composite oxide expressed as chemical formula LiMn_{2-c3}M_{c3}O₂ (here, M is at least any one selected from the group consisting of Co, Ni, Fe, Cr, Zn and Ta, and c3 satisfies 0.01≤c3≤0.1) or Li₂Mn₃MO₈ (here, M is at least any one selected from the group consisting of Fe, Co, Ni, Cu and Zn.); LiMn₂O₄ in which Li of the chemical formula is partially substituted with an alkaline earth metal ion, and the like, but is not limited thereto. The positive electrode may be Li-metal.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change to a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

And, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte solution as well as low resistance to ion movement in the electrolyte solution is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte solution include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte solution may include a non-aqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates ethylene carbonate and propylene carbonate may be preferably used because the cyclic carbonates have high permittivity as organic solvents of a high viscosity and thus dissociate a lithium salt well, and such a cyclic carbonate may be more preferably used since the cyclic carbonate may be mixed with a linear carbonate of a low viscosity and low permittivity such as dimethyl carbonate and diethyl carbonate in an appropriate ratio and used to prepare an electrolyte solution having a high electric conductivity.

As the metal salt, a lithium salt may be used, the lithium salt is a material which is easily dissolved in the non-aqueous electrolyte solution, and for example, as an anion of the lithium salt, it is possible to use one or more selected from the group consisting of F-, Cl⁻, I-, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

In the electrolyte solution, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte solution constituent components.

According to still another exemplary embodiment of the present invention, provided are a battery module including the secondary battery as a unit cell, and a battery pack including the same. The battery module and the battery pack include the secondary battery which has high capacity, high rate properties, and cycle properties, and thus, may be used as a power source of a medium-and-large sized device selected from the group consisting of an electric vehicle, a hybrid electric vehicle, a plug-in hybrid electric vehicle, and a power storage system.

### [Mode for Invention]

### <Examples and Comparative Examples>

### Example 1

After 94 g of a powder, in which Si and SiO₂ were mixed at a molar ratio of 1 : 1, was mixed in a reaction furnace, the resulting mixture was heated under vacuum at a sublimation temperature of 1,400°C. Thereafter, a mixed gas of the vaporized Si and SiO₂ was reacted in a cooling zone in a vacuum state having a cooling temperature of 800°C and condensed into a solid phase. Next, particles having a size of 6 um were prepared by pulverizing the aggregated particles using a ball mill for 3 hours. Thereafter, the particles were positioned in a hot zone of a CVD apparatus while maintaining an inert atmosphere by flowing Ar gas, and the methane was blown into the hot zone at 900°C using Ar as a carrier gas and reacted at 10⁻¹ torr for 5 hours to form a carbon layer on the particle surface. Thereafter, after 6 g of Li metal powder was added to the carbon layer-formed particles and mixed, silicon-based particles including a Li compound were prepared by performing an additional heat treatment at a temperature of 800°C in an inert atmosphere.

10 g of the silicon-based particles were added to 500 g of Di-water, the resulting mixture was stirred for 1 hour, filtered, and then dried.

After 10 g of the silicon-based particles were spread thinly within a thickness of 3 mm and put into an RF plasma chamber, CF₄ gas was injected under 0.07 torr to increase the internal pressure of the chamber to 0.2 torr. Thereafter, after plasma was formed by applying a power of 150 W to the chamber, the plasma was maintained for 6 minutes, vacuum was released to normal pressure, and then the sample was harvested. The above process was further repeated twice (three times in total) to obtain a negative electrode active material of Example 1.

### Example 2

A negative electrode active material of Example 2 was obtained by preparation in the same manner as in Example 1, except that the intensity of power applied was 200 W during the formation of plasma.

### Example 3

A negative electrode active material of Example 3 was obtained by preparation in the same manner as in Example 1, except that the intensity of power applied was 100 W during the formation of plasma.

### Comparative Example 1

A negative electrode active material of Comparative Example 1 was obtained by preparation in the same manner as in Example 1, except that none of the washing and the plasma treatment were performed.

### Comparative Example 2

A negative electrode active material of Comparative Example 2 was obtained by preparation in the same manner as in Example 1, except that the plasma treatment was not performed.

### Comparative Example 3 (additional carbon coating)

Washed silicon-based particles were obtained by preparation in the same manner as in Example 1, except that the plasma treatment was not performed.

After the silicon-based particles were put into a reaction furnace, a negative electrode active material was prepared by performing chemical vapor deposition (CVD) at 700°C for 4 hours using propane as a hydrocarbon gas to form an additional carbon layer on the silicon-based particles.

### Comparative Example 4 (HF treatment)

Washed silicon-based particles were obtained by preparation in the same manner as in Example 1, except that the plasma treatment was not performed.

After the silicon-based particles and a 0.1 M HF solution were mixed at a weight ratio of 1:7, the resulting solution was stirred for 1 hour, filtered, dried, and heat-treated at 300°C to prepare a negative electrode active material in which a LiF layer had been introduced into the surface.

### <Measurement of content of carbon layer>

The content of the carbon layer was analyzed using a CS-analyzer (CS-800, Eltra).

### <Measurement of content of Li included in negative electrode active material>

The content of the Li atom was confirmed by an ICP analysis using an inductively coupled plasma atomic emission spectrometer (ICP-OES, AVIO 500 from Perkin-Elmer 7300) .

### <Measurement of content and atomic ratio of element by X-ray photoelectron spectroscopy (XPS)>

The content (at%) and atomic ratio of the element on the surface of the negative electrode active material were confirmed through XPS (Nexsa ESCA System, Thermo Fisher Scientific (ESCA-02)).

Specifically, a survey scan spectrum and a narrow scan spectrum were obtained for each sample, and then the survey scan spectrum and the narrow scan spectrum were obtained while performing a depth profile. Depth profile was performed up to 3000 seconds using Monatomic Ar ion. Measurement and data processing conditions are as follows.
- X-ray source: Monochromated Al K α (1486.6 eV)
- X-ray spot size: 400 µm
- Sputtering gun: Monatomic Ar (energy: 1000 eV, current: low, raster width: 2 mm)
- Etching rate: 0.09 nm/s for Ta₂O₅
- Operation Mode: CAE (Constant Analyzer Energy) mode
- Survey scan: pass energy 200 eV, energy step 1 eV
- Narrow scan: scanned mode, pass energy 50 eV, energy step 0.1 eV
- Charge compensation: flood gun off
- SF: Al THERMO1
- ECF: TPP-2M
- BG subtraction: Shirley

Under the above conditions, the content and atomic ratio of each element were calculated based on the total content of 100 at% of the measured elements based on 100s.

The configurations of the negative electrode active materials prepared in the Examples and Comparative Examples are shown in the following Table 1.

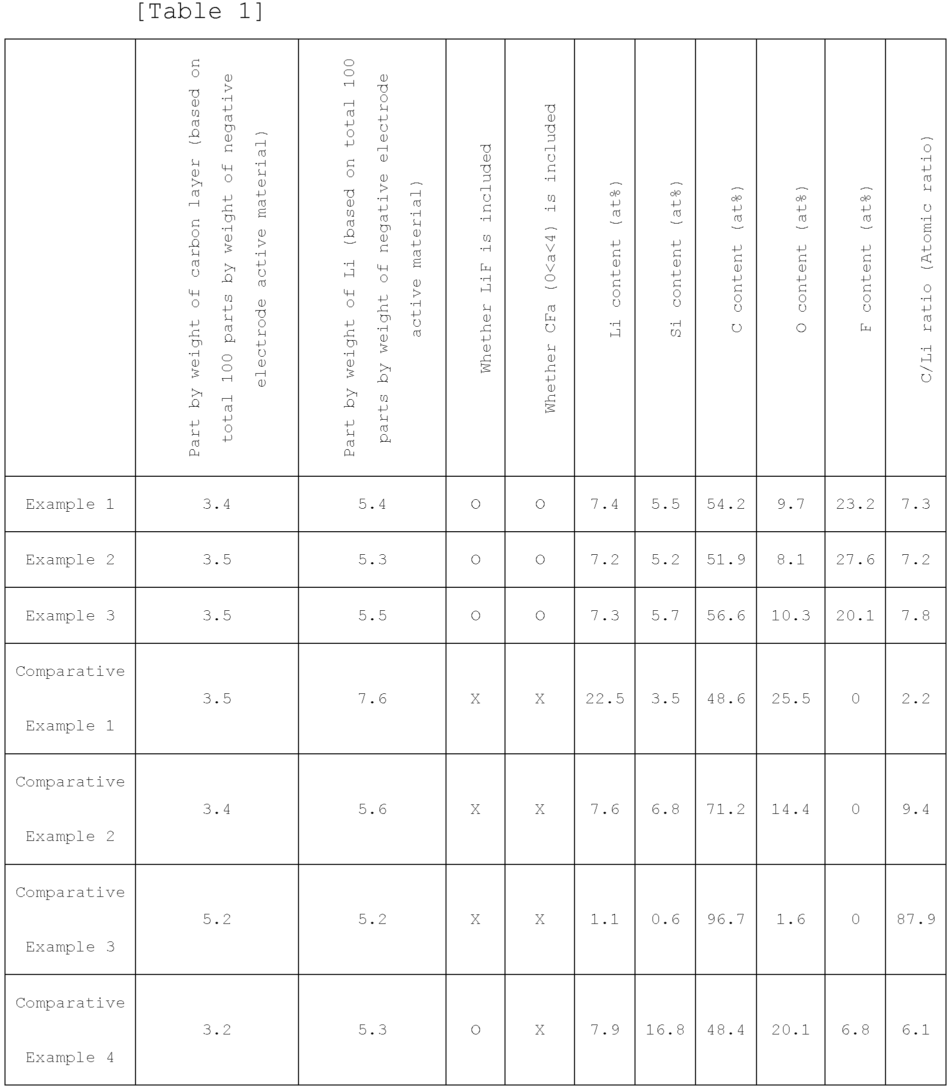

### <Experimental Example: Evaluation of discharge capacity, initial efficiency, and service life (capacity retention rate) characteristics>

### Manufacture of negative electrode

A mixture of the composite negative electrode active material prepared in Example 1 and graphite (average particle diameter (D50): 20 µm) as the carbon-based active material at a weight ratio of 15:85 was used as a negative electrode material.

The negative electrode material, styrene-butadiene rubber (SBR) as a binder, Super C65 as a conductive material, and carboxymethyl cellulose (CMC) as a thickener were mixed at a weight ratio of 96:2:1:1, and the resulting mixture was added to distilled water as a solvent for forming a negative electrode slurry to prepare a negative electrode slurry.

One surface of a copper current collector (thickness: 15 um) as a negative electrode current collector was coated with the negative electrode slurry in a loading amount of 3.6 mAh/cm², and the copper current collector was roll-pressed and dried in a vacuum oven at 130°C for 10 hours to form a negative electrode active material layer (thickness: 50 um), which was employed as a negative electrode according to Example 1 (thickness of the negative electrode: 65 um).

Furthermore, the negative electrodes of Examples 2 and 3 and Comparative Examples 1 to 4 were manufactured in the same manner as in Example 1, except that the negative electrode active materials of Examples 2 and 3 and Comparative Examples 1 to 4 were used, respectively, instead of the negative electrode active material of Example 1.

### Manufacture of secondary battery

A lithium metal foil was prepared as a positive electrode.
Coin-type half cells of Examples 1 to 3 and Comparative Examples 1 to 4 were manufactured, respectively, by interposing a porous polyethylene separator between the negative electrodes of Examples 1 to 3 and Comparative Examples 1 to 4 manufactured above and the positive electrode and injecting an electrolyte solution thereinto.

As the electrolyte solution, a product obtained by dissolving 0.5 wt% of vinylene carbonate (VC) in a solution of ethyl methyl carbonate (EMC) and ethylene carbonate (EC) mixed at a volume ratio of 7:3, and dissolving LiPF₆ at a concentration of 1 M was used.

### Evaluation of discharge capacity, initial efficiency, and service life (capacity retention rate) characteristics

The discharge capacities, initial efficiencies and cycle capacity retention rates of the secondary batteries manufactured in Examples 1 to 3 and Comparative Examples 1 to 4 were evaluated using an electrochemical charger/discharger.

The cycle capacity retention rate was evaluated at a temperature of 25°C, the first and second cycles were charged and discharged at 0.1 C, and the third and subsequent cycles were charged and discharged at 0.5 C (charging conditions: CC/CV, 5 mV/0.005 C cut-off, discharging conditions: CC, 1.5 V cut off).

The discharge capacity (mAh/g) and initial efficiency (%) were derived from the results during first charge/discharge.

The capacity retention rate was calculated as follows. Capacity retention rate (%) = {(Discharge capacity in the Nth cycle)/(Discharge capacity in the 1st cycle)} X 100 (In the equation, N is an integer of 1 or higher.)

The 50th cycle capacity retention rate (%) is shown in the following Table 2.

### <Experimental Example: Evaluation of processability (amount of slurry gas generated) characteristics>

A mixture of the negative electrode active material prepared in each of the Examples and the Comparative Examples and graphite (average particle diameter (D50): 20 µm) as the carbon-based active material at a weight ratio of 15:85 was used as a negative electrode material.

The negative electrode material, styrene-butadiene rubber (SBR) as a binder, Super C65 as a conductive material, and carboxymethyl cellulose (CMC) as a thickener were mixed at a weight ratio of 96:2:1:1, and the resulting mixture was added to distilled water as a solvent for forming a negative electrode slurry to prepare a negative electrode slurry.

The negative electrode slurry was each placed in a 7-mL volume aluminum pouch and sealed.

A difference between the weight of the aluminum pouch containing the negative electrode slurry in the air and the weight of the aluminum pouch containing the negative electrode slurry in water at 23°C was determined, and a volume of gas immediately after preparing the negative electrode slurry was measured by dividing the difference by the density of water at 23°C.

Next, after the aluminum pouch containing the negative electrode slurry was stored at 60°C for 3 days, a difference between the weight of the aluminum pouch containing the negative electrode slurry in the air and the weight of the aluminum pouch containing the negative electrode slurry in water at 60°C was determined, and a volume of gas after storing the negative electrode slurry for 3 days was measured by dividing the difference by the density of water at 60°C.

A difference between the volume of gas measured after storing the negative electrode slurry for 3 days and the volume of gas measured immediately after preparing the negative electrode slurry was defined as an amount of gas generated, and is shown in the following Table 2.

**[Table 2]**

| Battery | Discharge capacity (mAh/g) | Initial efficiency (%) | Capacity retention rate (%) | Amount of slurry gas generated (ml) |
|---|---|---|---|---|
| Example 1 | 502 | 91.8 | 94.2 | 0 |
| Example 2 | 502 | 91.6 | 94.0 | 0 |
| Example 3 | 501 | 91.0 | 93.9 | 1 |
| Comparative Example 1 | 506 | 92.1 | 85.1 | 150 |
| Comparative Example 2 | 496 | 88.9 | 87.2 | 70 |
| Comparative Example 3 | 497 | 89.2 | 88.1 | 65 |
| Comparative Example 4 | 495 | 86.9 | 87.5 | 50 |

A negative electrode active material according to an exemplary embodiment of the present invention includes: silicon-based particles including SiOₓ (0<x<2) and a Li compound; a carbon layer provided on at least a part on the surface of the silicon-based particles; LiF; and CFₐ (0<a<4), in which the content of F is 10 at% or more and the content of Li is less than 10 at% according to a surface analysis of the negative electrode active material by X-ray photoelectron spectroscopy, and it could be confirmed that Examples 1 to 3 using the negative electrode active material of the present invention have excellent discharge capacity, initial efficiency, and capacity retention rate, and no gas was generated in the slurry or the amount of gas generated in the slurry was remarkably low. This seems to make the performance of the battery excellent by minimizing the damage to silicon-based particles in the mixing process because the surface of the negative electrode active material of the present invention includes Li and F within the above range to allow CFₐ (0<a<4) to passivate particles in the water-based slurry while significantly reducing side reactions with moisture due to the small content of Li on the surface.

In contrast, in Comparative Example 1, the negative electrode active material did not include LiF and CFₐ (0<a<4), so that it could be confirmed that the moisture in the slurry easily reacted with the silicon-based particles to generate gas, and the discharge capacity, initial efficiency and capacity retention rate were decreased.

In Comparative Example 2, the content of lithium on the surface of the negative electrode active material was small because the silicon-based particles were washed after the doping of Li, but the negative electrode active material did not include LiF and CFₐ (0<a<4), so that it could be confirmed that the discharge capacity, initial efficiency and capacity retention rate were decreased because the reactivity of moisture and silicon-based particles was still high.

In Comparative Examples 3, the negative electrode active material did not include LiF and CFₐ (0<a<4), but the surface of the negative electrode active material was coated with an additional carbon layer, and the amount of gas generated is slightly lower than that of Comparative Example 1, but it could be confirmed that the amount of gas generated was still large, and the discharge capacity, initial efficiency and capacity retention rate were decreased.

In Comparative Example 4, the surface of the negative electrode active material was coated with LiF, and the silicon-based particles were passivated by LiF, but the degree of passivation was low, so that it could be confirmed that the amount of gas generated was still large, and the discharge capacity, initial efficiency and capacity retention rate were not improved.

Therefore, in the present invention, the overall water-based processability, discharge capacity, initial efficiency, and capacity retention rate could be remarkably improved by providing a negative electrode active material including silicon-based particles, LiF, and CFₐ (0<a<4) and having a low content of Li on the surface thereof.

## Claims

1. A negative electrode active material comprising:
silicon-based particles comprising SiOₓ, wherein 0<x<2, and a Li compound;
a carbon layer provided on at least a part of the surface of the silicon-based particles;
LiF; and
CFₐ, wherein 0<a<4,
wherein according to a surface analysis of the negative electrode active material by X-ray photoelectron spectroscopy, a content of F is 10 at% or more, and
a content of Li is less than 10 at%.

2. The negative electrode active material of claim 1, wherein an atomic ratio (C/Li ratio) of C relative to Li is more than 4 and 10 or less according to a surface analysis of the negative electrode active material by X-ray photoelectron spectroscopy.

3. The negative electrode active material of claim 1, wherein LiF and CFₐ, wherein (0<a<4) are provided on the silicon-based particles.

4. The negative electrode active material of claim 1, wherein a content of F is 10 at% or more and 50 at% or less according to a surface analysis of the negative electrode active material by X-ray photoelectron spectroscopy.

5. The negative electrode active material of claim 1, wherein a content of Li is 1 at% or more and less than 10 at% according to a surface analysis of the negative electrode active material by X-ray photoelectron spectroscopy.

6. The negative electrode active material of claim 1, wherein a content of O is 15 at% or less according to a surface analysis of the negative electrode active material by X-ray photoelectron spectroscopy.

7. The negative electrode active material of claim 1, wherein a content of Si is 7 at% or less according to a surface analysis of the negative electrode active material by X-ray photoelectron spectroscopy.

8. The negative electrode active material of claim 1, wherein a content of C is 40 at% or more according to a surface analysis of the negative electrode active material by X-ray photoelectron spectroscopy.

9. The negative electrode active material of claim 1, wherein an atomic ratio (F/O ratio) of F relative to O is 1 or more and 6 or less according to a surface analysis of the negative electrode active material by X-ray photoelectron spectroscopy.

10. The negative electrode active material of claim 1, wherein a content of CFₐ, wherein (0<a<4), is higher than a content of LiF.

11. The negative electrode active material of claim 1, further comprising SiF_{b}, wherein (0<b<4).

12. The negative electrode active material of claim 1, wherein Li is comprised in an amount of 0.1 parts by weight to 40 parts by weight based on total 100 parts by weight of the negative electrode active material.

13. The negative electrode active material of claim 1, wherein the carbon layer is comprised in an amount of 0.1 parts by weight to 50 parts by weight based on total 100 parts by weight of the negative electrode active material.

14. A method for preparing the negative electrode active material according to any one of claims 1 to 13, the method comprising:
forming silicon-based particles comprising SiOₓ, wherein 0<x<2, and a Li compound and having a carbon layer provided on at least a part of the surface thereof;
washing the silicon-based particles with an acid or water; and
treating the silicon-based particles with fluorine plasma.

15. The method of claim 14, wherein the treating of the silicon-based particles with fluorine plasma comprises:
putting the silicon-based particles into a plasma chamber, and then injecting CF₄ gas;
increasing pressure in the chamber; and
forming plasma in the chamber.

16. A negative electrode comprising the negative electrode active material according to any one of claims 1 to 13.

17. A secondary battery comprising the negative electrode according to claim 16.
